Europäisches Patentamt

European Patent Office

Office européen des brevets

(19)

(11) **EP 0 574 287 B1**

(12) **FASCICULE DE BREVET EUROPEEN**

(45) Date de publication et mention
de la délivrance du brevet:
**02.09.1998 Bulletin 1998/36**

(51) Int Cl.[6]: **G01T 1/17**

(21) Numéro de dépôt: **93401387.1**

(22) Date de dépôt: **01.06.1993**

(54) **Circuit de temps mort de type reconductible**

Rückstellbarer Totzeitschalter

Re-settable dead time circuit

(84) Etats contractants désignés:
**DE ES GB IT**

(30) Priorité: **03.06.1992 FR 9206712**

(43) Date de publication de la demande:
**15.12.1993 Bulletin 1993/50**

(73) Titulaire: **COMMISSARIAT A L'ENERGIE
ATOMIQUE
75015 Paris (FR)**

(72) Inventeur: **Bouchard, Jacques
F-91540 Mennecy (FR)**

(74) Mandataire: **Dubois-Chabert, Guy et al
c/o BREVATOME
25, rue de Ponthieu
75008 Paris (FR)**

(56) Documents cités:
**EP-A- 0 144 674          US-A- 4 882 503**

- **NUCLEAR INSTRUMENTS & METHODS IN
PHYSICS RESEARCH, vol. a243, no. 2/3, Mars
1986 AMSTERDAM NL, pages 539-548,
CHAUVENET,B ET AL. 'properties of a
4pi-beta-gamma coincidence system with a
cumulative dead - time circuit'**
- **JOURNAL OF PHYSICS E. SCIENTIFIC
INSTRUMENTS, vol. 11, no. 6, Juin 1978
BRISTOL,GB, pages 499-500, BABEY S K ET AL.
'improved counting technique for use with
paralysable event detectors'**

## Description

La présente invention concerne un circuit de temps mort de type reconductible.

Elle s'applique notamment à la métrologie de la radioactivité.

On rappelle que l'expression "temps mort" est utilisée pour désigner, en électronique nucléaire, la paralysie d'une chaîne de mesure pendant le traitement d'une impulsion qui arrive à l'entrée de cette chaîne de mesure.

Le temps mort est donc une cause de pertes de comptage.

En métrologie des rayonnements ionisants, il est nécessaire de connaître précisément la durée de cette paralysie pour pouvoir corriger le taux de comptage observé afin de connaître le taux de comptage vrai.

Plutôt que de laisser opérer le temps mort propre de la chaîne de mesure, qui est souvent faible mais qui est très mal connu et dépend fortement des conditions de mesure, il est connu d'imposer un temps mort extérieur plus long que le temps mort propre de la chaîne de mesure mais surtout mieux connu.

Pour ce faire, on connaît des circuits de temps mort de type non reconductible.

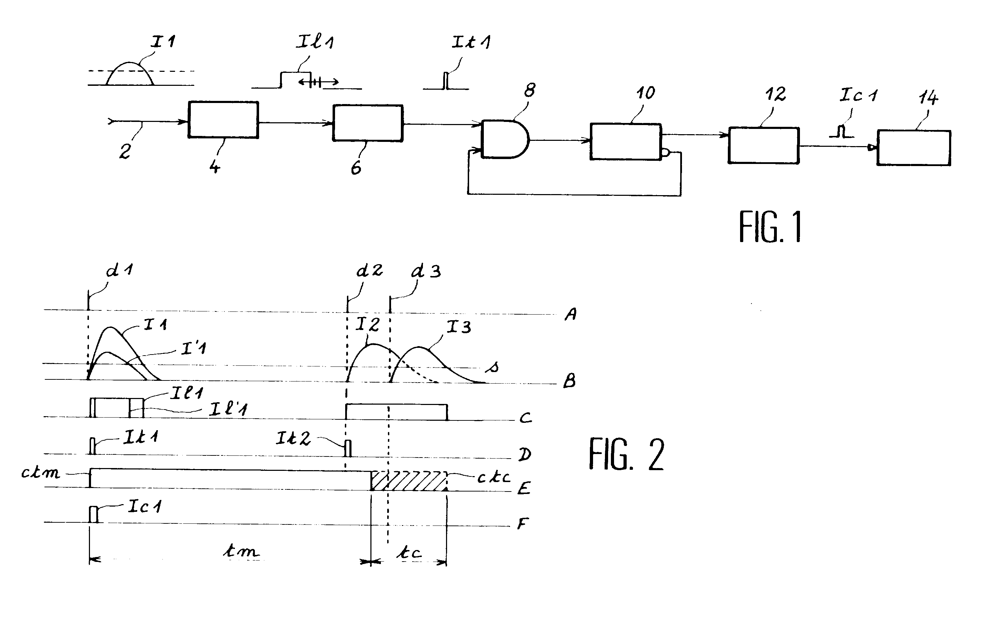

Un circuit connu de ce type est schématiquement représenté sur la figure 1.

Un tel circuit est utilisé lorsque le taux de comptage n'est pas trop élevé et ne dépasse pas une valeur de l'ordre de 10 000 désintégrations par seconde.

Une impulsion à traiter I1, de forme quelconque, qui arrive à l'entrée d'un dispositif à seuil 4 est d'abord détectée par ce dispositif 4.

Ce dernier fournit une impulsion logique II1 de longueur variable (ce que l'on a symbolisé par une double flèche sur la figure 1).

Le front avant de cette impulsion II1 est extrait, grâce à des moyens de mise en forme appropriés 6, pour donner un top It1 de faible largeur.

Après être passé par une porte logique 8 de type ET, ce top va déclencher un monostable 10 de type non redéclenchable.

Ce dernier fournit une impulsion qui, après traitement dans des moyens de mise en forme appropriés 12, est comptée par des moyens de comptage 14.

Un rebouclage d'une sortie du monostable 10 sur la porte logique interdit tout autre déclenchement pendant une durée tm fixée par l'opérateur.

Le dispositif représenté par la figure 1 est donc paralysé pendant ce temps tm.

Il est possible de remonter au taux de comptage vrai à l'aide de la formule suivante qui est bien connue :

$$N = N'/(1 - N' \times tm)$$

où N représente le taux de comptage vrai
N' représente le taux de comptage observé et

tm est le temps mort imposé par l'opérateur.

Le chronogramme de la figure 2 est relatif au dispositif de la figure 1 et montre, dans sa partie A, des événements (désintégrations) d1, d2 et d3 produisant, à l'entrée du dispositif à seuil 4, les impulsions I1, I2, I3, le seuil étant noté s (partie B de la figure 2).

Sur la partie C on voit les impulsions correspondantes fournies par la sortie du dispositif 4.

Ces impulsions ont une longueur variable : on voit que l'impulsion II'1 correspondant à une impulsion I'1 qui se produit pendant la durée de l'impulsion I1, a une longueur inférieure à celle de l'impulsion II1 correspondant à I1.

Sur la partie D de la figure 2 on voit les impulsions It1 et It2 qui correspondent à I1 et I2 et qui sont disponibles à la sortie des moyens de mise en forme 6.

Sur la partie E de la figure 2 on voit le créneau de temps mort ctm imposé par l'événement d1.

Sur la figure F de la figure 2, on voit l'impulsion Ic1 qui correspond à I1 et qui a été comptée.

Si le taux de comptage n'est pas trop élevé (s'il ne dépasse pas une valeur de l'ordre de 10 000 désintégrations par seconde), la probabilité d'avoir une impulsion à la fin du temps mort sera faible et le circuit de temps mort représenté sur la figure 1 (et constitué par l'association de la porte logique 8 et du monostable 10) ne posera pas trop de problèmes.

Par contre, si ce taux de comptage observé est élevé (supérieur à 10 000 désintégrations par seconde), la probabilité d'avoir des situations telles que celle qui est représentée sur la figure 2 (impulsion I3 se présentant à la fin du temps mort, avant la fin de l'impulsion I2 qui, elle, se présente avant la fin du temps mort) n'est plus négligeable.

Alors, comme on peut le constater sur la figure 2, l'impulsion I3 ne peut pas être détectée, du fait de la longueur de l'impulsion I2, alors que la mesure de la longueur du temps mort imposé tm pourrait laisser supposer le contraire.

Il existe ainsi un créneau de temps mort caché ctc, de durée tc, qui est dû à un empilement d'impulsions.

Il est alors très difficile d'effectuer une correction de temps mort correcte (problème de temps morts de types différents en série, etc...), la formule donnée plus haut étant alors fausse du fait que le temps mort caché tc n'est pas maîtrisé.

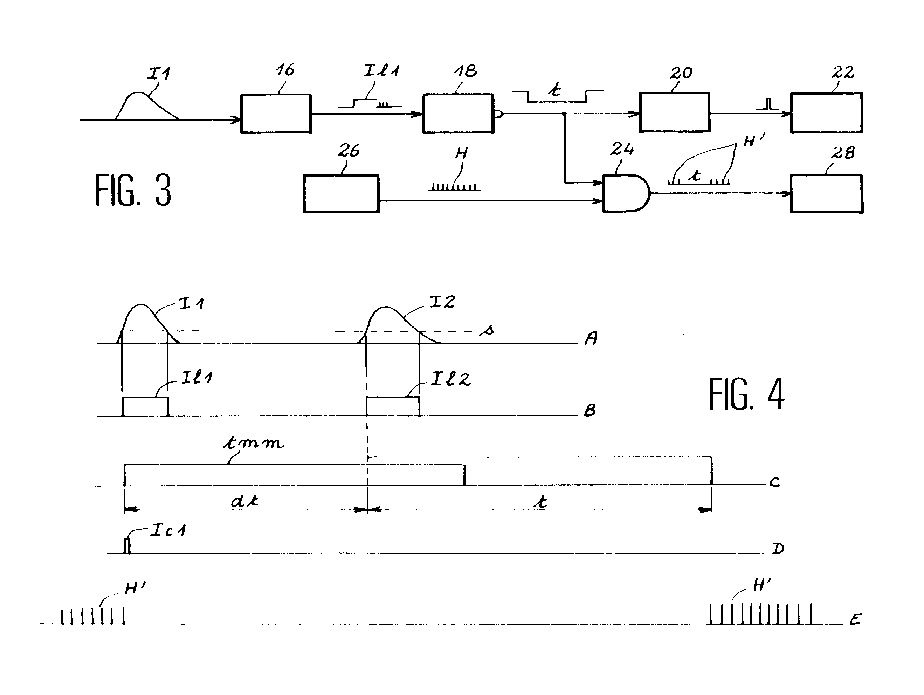

Dans ces conditions, pour déterminer le taux de comptage vrai il convient d'utiliser un circuit de temps mort de type reconductible dont un exemple est représenté sur la figure 3.

Un tel circuit de temps mort de type reconductible, avec mesure du temps actif (temps de comptage moins somme de tous les temps morts), est le seul dispositif valable capable de prendre en compte tous les temps morts de types divers de la chaîne de mesure.

Le circuit connu représenté sur la figure 3 comprend un dispositif à seuil 16 qui reçoit en entrée une impulsion telle que l'impulsion I1, résultant d'une désintégration, et qui est suivi par un monostable 18 redéclenchable, lui-même suivi par un dispositif de mise en forme 20, qui fournit les impulsions à compter aux moyens de comptage 22.

Une porte logique 24 de type ET reçoit en entrée les impulsions de sortie du monostable 18 et un train de tops d'horloge fournis par une horloge 26 (par exemple à 1 MHz).

L'entrée d'un moyen de comptage de tops d'horloge 28 est reliée à la sortie de la porte logique 24.

La mesure du temps actif consiste à déterminer, dans le temps de comptage total, la fraction de temps libre (voie non occupée par une impulsion).

Dans le cas de la figure 3, le circuit de temps mort est constitué par l'association du monostable redéclenchable 18, de la porte logique 24 et du générateur d'horloge 26.

Le monostable 18 est déclenché par l'impulsion logique I11 fournie par le discriminateur 16 et ce, pour une durée minimale t imposée.

Si pendant ce temps aucune impulsion ne s'est présentée à l'entrée du discriminateur 16, le monostable 18 termine son cycle normal et la voie est libérée.

Par contre, si pendant l'intervalle de temps t, une nouvelle impulsion I2 arrive, le monostable 18 est redéclenché pour une durée équivalente à t.

Dans ce cas, la longueur de la paralysie de la chaîne de mesure est donc égale à t+dt.

Pendant tout ce temps, le créneau de temps mort t a "échantillonné" un train de tops d'horloge fournis par le générateur 26, à l'aide de la porte logique 24.

Tout ceci est illustré par le chronogramme de la figure 4.

On voit sur la partie A de cette figure 4 les impulsions I1, I2 se présentant à l'entrée du discriminateur 16 (dont le seuil est noté s).

On voit sur la partie B de la figure 4 les impulsions logiques I11 et I12 disponibles à la sortie du discriminateur 16 et correspondant respectivement à I1 et I2.

La partie C de la figure 4 montre le créneau de temps mort minimum tmm disponible à la sortie du monostable 18, l'intervalle de temps dt au bout duquel arrive l'impulsion I2 et le redéclenchement du monostable 18 pendant la durée t.

La partie D de la figure 4 montre l'impulsion Ic1 comptée par les moyens 22 et correspondant à l'impulsion I1 et la partie E de la figure 4 montre les tops d'horloge dont le nombre est noté H' et qui ont été comptés par le moyen 28.

La mesure de la paralysie de la voie est donnée par le rapport H'/H où H représente le nombre de tops d'horloge fournis par le générateur 26 pendant le temps de comptage.

On précise que la porte logique 24 est rendue fermée (empêchant ainsi les tops fournis par le générateur 26 de passer) quand le temps mort est déclenché et rendue ouverte (permettant ainsi le passage de ces tops) lorsque ce temps mort se termine.

Le taux de comptage vrai N est alors donné, en fonction du taux de comptage observé N', par la formule suivante :

$$N = N' \times (H/H').$$

Les circuits de temps mort de type reconductible, avec mesure de temps actif, sont connus depuis fort longtemps et ont donné lieu à de nombreuses réalisations, en particulier dans les analyseurs multicanaux (du genre de ceux qui sont commercialisés par les sociétés Camberra, Northern et Intertechnique par exemple).

Les circuits de temps mort connus, de type reconductible, présentent un inconvénient : avec ces circuits, la détermination du temps actif n'est qu'imparfaitement effectuée.

La présente invention a pour but de remédier à cet inconvénient en proposant un circuit de temps mort, de type reconductible, qui a les propriétés mentionnées ci-après.

D'une part, le circuit objet de l'invention permet de disposer d'un créneau de temps mort dont la durée représente le plus exactement possible la paralysie vraie d'une chaîne de mesure comportant ce circuit et ce, dans tous les cas de figure, en tenant compte de la longueur des impulsions se présentant à l'entrée de ce circuit.

Ceci est essentiel car le créneau de temps mort est destiné à échantillonner un train de tops d'horloge pour la mesure du temps actif.

D'autre part, le circuit objet de l'invention permet d'avoir un fonctionnement très sûr de la chaîne de mesure, c'est- à-dire d'empêcher tout comportement erratique de cette chaîne de mesure dans certaines circonstances, comme par exemple l'arrivée d'une impulsion juste à la fin du temps mort, un tel comportement étant d'ailleurs observé dans des chaînes de mesure comportant des circuits de temps mort connus, de type reconductible.

La présente invention a pour objet un circuit de temps mort, de type reconductible, qui reçoit en entrée des impulsions logiques et des tops d'horloge, ce circuit comprenant un monostable qui est déclenché par les impulsions d'entrée, qui définit un temps mort minimal imposé et qui est redéclenchable pour reconduire la durée de ce temps mort minimal, le circuit fournissant en sortie

- d'une part des impulsions à compter et
- d'autre part ceux des tops d'horloge qui sont situés en dehors du temps mort et dont le comptage définit un temps actif permettant de déterminer le nombre effectif d'impulsions d'entrée, connaissant le nombre d'impulsions comptées, pendant un temps donné, ce circuit de temps mort étant caractérisé en ce qu'il comprend en outre
- un bistable qui est déclenché par une impulsion d'entrée et qui fournit en sortie l'impulsion à compter correspondante,

- une première porte logique par l'intermédiaire de laquelle la remise à zéro du bistable est effectuée, après disparition de toutes les causes de temps mort, la première porte logique recevant pour ce faire en entrée le signal de temps mort imposé et l'impulsion d'entrée, la remise à zéro du bistable autorisant le redémarrage du comptage de temps actif, le monostable étant disponible, pendant cette remise à zéro, pour redéclencher un temps mort imposé s'il reçoit une nouvelle impulsion d'entrée,
- une deuxième porte logique par l'intermédiaire de laquelle l'impulsion d'entrée déclenche le bistable et qui est fermée après le déclenchement de ce bistable,

et en ce que le circuit comprend en outre un moyen de remise à zéro prévu pour engendrer une impulsion de remise à zéro à partir de l'impulsion fournie par la sortie de la première porte logique et pour appliquer cette impulsion de remise à zéro au bistable, la deuxième porte logique étant maintenue fermée pendant la durée de cette impulsion de remise à zéro.

Selon un mode de réalisation particulier du circuit objet de l'invention, ce dernier comprend en outre :

- un moyen de retardement prévu pour retarder d'un temps d1 le signal de blocage de mesure de temps actif à partir de l'arrivée d'une impulsion d'entrée, ce temps d1 étant égal au retard d2 du signal de déblocage de mesure du temps actif par rapport au moment où la prise en compte d'une nouvelle impulsion d'entrée est autorisée, et
- une troisième porte logique qui est fermée après le déclenchement du bistable, et par laquelle passent les tops d'horloge à compter.

Le moyen de retardement peut comprendre deux inverseurs montés en série, l'un de ceux-ci recevant les impulsions logiques d'entrée tandis que la sortie de l'autre inverseur est reliée à une entrée de la troisième porte logique.

La première porte logique peut comprendre en outre une entrée destinée à recevoir un signal de temps mort extérieur.

Le circuit objet de l'invention peut comprendre en outre un discriminateur qui fournit les impulsions logiques d'entrée à partir d'impulsions analogiques incidentes.

De préférence, le circuit objet de l'invention comprend en outre un moyen prévu pour produire les tops d'horloge d'entrée à partir d'autres tops d'horloge dont la largeur est très supérieure à la largeur des tops d'horloge d'entrée, cette dernière largeur étant la plus faible possible, compte tenu des composants électroniques utilisés.

On utilise par exemple des tops d'horloge d'entrée dont la largeur ne dépasse pas 5 ns et que l'on obtient à partir de tops d'horloge dont la largeur est égale à 100 ns ou 500 ns par exemple.

Il est nécessaire d'utiliser des tops d'horloge d'entrée de faible largeur car, dans le cas contraire, on augmenterait l'erreur sur la mesure du temps actif.

Le moyen prévu pour produire les tops d'horloge d'entrée peut être un moyen apte à extraire les fronts avant et arrière desdits autres tops d'horloge.

La présente invention sera mieux comprise à la lecture de la description d'exemples de réalisation donnés ci-après à titre purement indicatif et nullement limitatif, en faisant référence aux dessins annexés sur lesquels :

- la figure 1 est une vue schématique d'un circuit de temps mort connu, de type non reconductible, et a déjà été décrite,
- la figure 2 est un chronogramme relatif au circuit de temps mort représenté sur la figure 1 et a déjà été décrite,
- la figure 3 est une vue schématique d'un circuit de temps mort connu, de type reconductible, et a déjà été décrite,
- la figure 4 est un chronogramme relatif au circuit de temps mort représenté sur la figure 3 et a déjà été décrite,
- la figure 5 est un schéma fonctionnel d'un mode de réalisation particulier du circuit de temps mort, de type reconductible, objet de la présente invention,
- les figures 6a et 6b montrent le schéma électrique d'un circuit de temps mort conforme à l'invention, la première partie de ce schéma étant représentée sur la figure 6a tandis que la deuxième partie du schéma se trouve sur la figure 6b,
- la figure 7 est un chronogramme de signaux obtenus au début du temps mort du circuit conforme à l'invention qui est représenté sur les figures 6a et 6b,
- la figure 8 est un chronogramme de signaux qui sont obtenus à la fin du temps mort du circuit représenté sur les figures 6a et 6b,
- les figures 9, 10 et 11 sont des chronogrammes illustrant des aspects importants de la présente invention, et
- la figure 12 est un chronogramme montrant les tops d'horloge d'entrée dans un circuit conforme à l'invention, ces tops d'horloge d'entrée étant obtenus à partir d'autres tops d'horloge de largeur très supérieure à celle de ces tops d'horloge d'entrée.

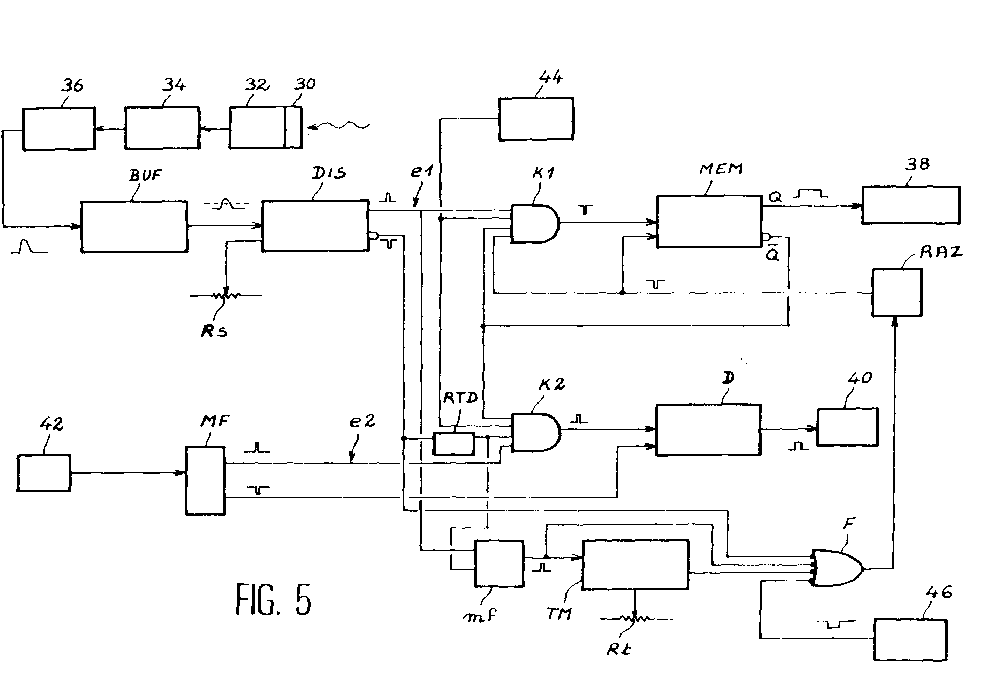

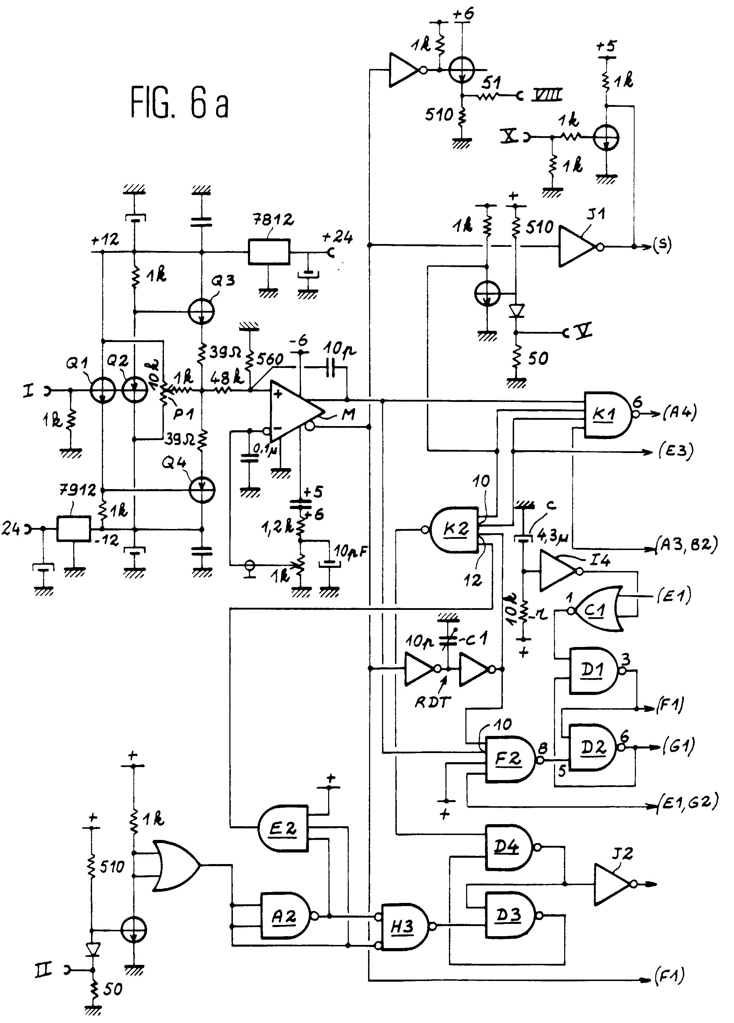

La figure 5 est un schéma fonctionnel d'un circuit de temps mort, de type reconductible, conforme à l'invention.

Le circuit représenté sur la figure 5 reçoit, à une entrée e1, des impulsions logiques et, à une entrée e2, des tops d'horloge.

Les impulsions logiques qui sont traitées par le circuit de temps mort de la figure 5 peuvent provenir de tout système fournissant en sortie des impulsions logiques.

Dans l'exemple représenté sur la figure 5, ces impulsions logiques proviennent d'un discriminateur simple DIS.

On a représenté symboliquement sur la figure 5 le réglage Rs du seuil de ce discriminateur DIS.

Ce dernier reçoit en entrée des impulsions analogiques qui, dans l'exemple représenté, proviennent d'un ensemble de détection de rayonnement gamma, comprenant successivement un scintillateur 30, un photomultiplicateur 32, un pré-amplificateur 34 et un amplificateur 36.

Le circuit de temps mort de la figure 5 est isolé de cet ensemble par un circuit tampon BUF comme on le voit sur la figure 5.

Le discriminateur DIS fait une sélection en amplitude et fournit une impulsion logique (en fait une impulsion logique positive et une impulsion logique négative dans l'exemple représenté) lorsque son seuil inférieur a été franchi.

Le circuit de temps mort conforme à l'invention, qui est représenté sur la figure 5, comprend un monostable TM qui est déclenché par les impulsions logiques d'entrée, qui définit un temps mort minimal imposé tm et qui est redéclenchable pour reconduire la durée de ce temps mort minimal.

On a représenté symboliquement sur la figure 5, le réglage Rt de ce temps mort minimal imposé.

Le circuit de temps mort de la figure 5 fournit en sortie des impulsions à compter et ceux des tops d'horloge qui sont situés en dehors du temps mort et dont le comptage définit un temps actif permettant de déterminer le nombre effectif N d'impulsions d'entrée, connaissant le nombre N' d'impulsions comptées pendant un temps donné.

On voit sur la figure 5 des moyens de comptage 38 permettant de trouver le nombre N' et des moyens de comptage 40 permettant de trouver le nombre H' des tops d'horloge qui sont situés en dehors du temps mort.

Un générateur d'horloge 42 fournit des tops d'horloge dont le nombre, pendant le temps de comptage, est noté H et qui sont traités par des moyens de mise en forme MF fournissant les tops d'horloge à l'entrée e2 du circuit de temps mort de la figure 5.

Ce dernier comprend également trois portes logiques K1, K2 et F, un bistable MEM, un dispositif de remise à zéro RAZ, un autre bistable D et un moyen de retardement RTD, agencés comme on le voit sur la figure 5.

La sortie du bistable MEM est reliée à l'entrée des moyens de comptage 38 tandis que la sortie du bistable D est reliée à l'entrée des moyens de comptage 40.

Les moyens 44 sont prévus pour commander le commencement du comptage et la fin de ce dernier et, sur ordre d'un utilisateur, fournissent un signal de marche ou d'arrêt à une entrée de la porte logique K1 et à une entrée de la porte logique K2, comme on le voit sur la figure 5.

Une impulsion logique fournie par le discriminateur DIS est utilisée pour déclencher le bistable MEM à travers la porte logique K1 et pour déclencher, par l'intermédiaire d'un moyen de mise en forme mf, le monostable TM pour la durée minimale Tm.

Lorsque le bistable MEM a été déclenché, les portes K1 et K2 sont fermées grâce au "rebouclage" de la sortie inverseuse du bistable MEM sur une entrée de la porte K2.

Si une nouvelle impulsion logique arrive à l'entrée e1 du circuit de temps mort de la figure 5 pendant ce temps Tm, le monostable TM est redéclenché (pour une durée Tm).

Si aucune impulsion logique ne s'est présentée à l'entrée e1, le monostable Tm revient à son état stable et une impulsion de remise à zéro est appliquée au bistable MEM.

Cette impulsion de remise à zéro est engendrée par le dispositif de remise à zéro RAZ à partir du front arrière d'une impulsion qui est disponible à la sortie de la porte logique F lorsque le monostable TM revient à son état stable.

Le circuit de temps mort autorise alors le comptage d'une impulsion logique suivante.

Comme on le voit sur la figure 5, la sortie du dispositif RAZ est reliée non seulement à l'entrée de remise à zéro du bistable MEM mais encore à une entrée de la porte logique K1.

Ainsi, cette porte K1 est maintenue fermée pendant la durée de l'impulsion de remise à zéro issue du dispositif RAZ.

La porte logique F autorise la remise à zéro du bistable MEM après disparition de toutes les causes de temps mort.

Pour ce faire, cette porte logique F reçoit en entrée le signal de temps mort imposé qui est issu du monostable TM, et, de façon directe, l'impulsion logique d'entrée.

Dans l'exemple représenté sur la figure 5, le circuit de temps mort conforme à l'invention fonctionne en association avec un autre appareillage électronique 46 qui engendre lui-même un temps mort extérieur et, dans ces conditions, la porte F comporte une autre entrée qui reçoit un signal de temps mort extérieur de la part de l'appareillage 46.

On voit ainsi que le bistable MEM est remis à zéro seulement lorsque tous les signaux représentant un temps de paralysie ont été pris en compte.

La liaison directe entre le discriminateur DIS et la porte F permet de tenir compte de la longueur de l'impulsion logique d'entrée qui, dans certain cas (saturation du scintillateur par exemple), peut être plus grande que la durée du temps interne du circuit de temps mort de la figure 5.

C'est donc le signal le plus long qui détermine le moment de la remise à zéro de la chaîne de mesure de la figure 5.

La porte logique F peut être considérée comme un détecteur de "période de calme".

Si toutes les causes de temps mort ont disparu, on a alors, à la sortie de la porte F, une transition qui est détectée par le dispositif de remise à zéro RAZ.

L'entrée du moyen de retardement RTD est reliée à la sortie du discriminateur DIS et la sortie du moyen de retardement RTD est reliée à une entrée de la porte logique K2.

Ce moyen de retardement RTD permet de retarder d'un temps d1 le signal de blocage de mesure de temps actif à partir de l'arrivée d'une impulsion logique d'entrée, ce temps d1 étant choisi égal au retard d2 du signal de déblocage de mesure de temps actif par rapport au moment où la prise en compte d'une nouvelle impulsion d'entrée est autorisée.

La mesure du temps actif est effectuée par l'intermédiaire de la porte K2 après mise en forme (par les moyens MF) du signal d'horloge issu du générateur 42.

Le bistable D sert à reconstituer un signal d'horloge H' pouvant être accepté par les moyens de comptage 40.

Le temps actif est directement donné par le rapport H'/H.

Le taux de comptage vrai N est égal au taux de comptage N' obtenu, divisé par ce rapport H'/H.

On rappelle que H représente le nombre de tops d'horloge avant échantillonnage par le temps mort tandis que H' représente le nombre de tops d'horloge après cet échantillonnage (pendant le temps de comptage).

Dans le circuit de temps mort représenté sur la figure 5, la fermeture de la porte logique K2 est effectuée par l'impulsion logique à analyser après un retard d1 égal au temps de remise à zéro de tout le circuit (d2).

De plus, le monostable TM fixe la durée minimale de la paralysie de la chaîne de comptage mais n'intervient pas directement dans la fermeture de cette porte logique K2 (contrairement aux circuits de temps mort de type reconductible connus, tels que celui de la figure 3, ce qui présente des inconvénients).

La seule fonction du monostable TM de la figure 5 est de détecter l'absence d'impulsion logique à l'entrée du circuit de temps mort.

En outre, le circuit de temps mort de la figure 5 comporte une liaison directe entre la sortie du discriminateur DIS et la porte logique F, ce qui permet de tenir compte de la longueur des impulsions logiques d'entrée, cette longueur pouvant être plus grande que le temps mort imposé.

Enfin, lorsque la remise à zéro du bistable MEM est lancée, rien ne peut l'arrêter, ce qui évite des erreurs de comptage de temps actif.

Si une impulsion logique se présente à l'entrée du circuit de temps mort à ce moment là, l'analyse de cette impulsion (déclenchement du bistable MEM entre autres) est légèrement différée par rapport à l'impulsion logique d'entrée sans pour cela remettre en question l'exactitude de la mesure de la paralysie (due à la fermeture de la porte K2 par l'impulsion logique d'entrée avec le retard d1).

Un circuit de temps mort conforme à l'invention est par exemple utilisable dans toute chaîne de mesure où une bonne correction des pertes de comptage est très importante, par exemple dans un ensemble dit de "coïncidences 4 pi bêta/gamma multiparamétrique" utilisé en mesure absolue.

Il est également utilisable dans un discriminateur simple faisant partie d'un système de mesure comportant un codeur d'amplitude.

Dans ce cas, le temps mort engendré par le codeur d'amplitude associé est pris en compte par ce discriminateur.

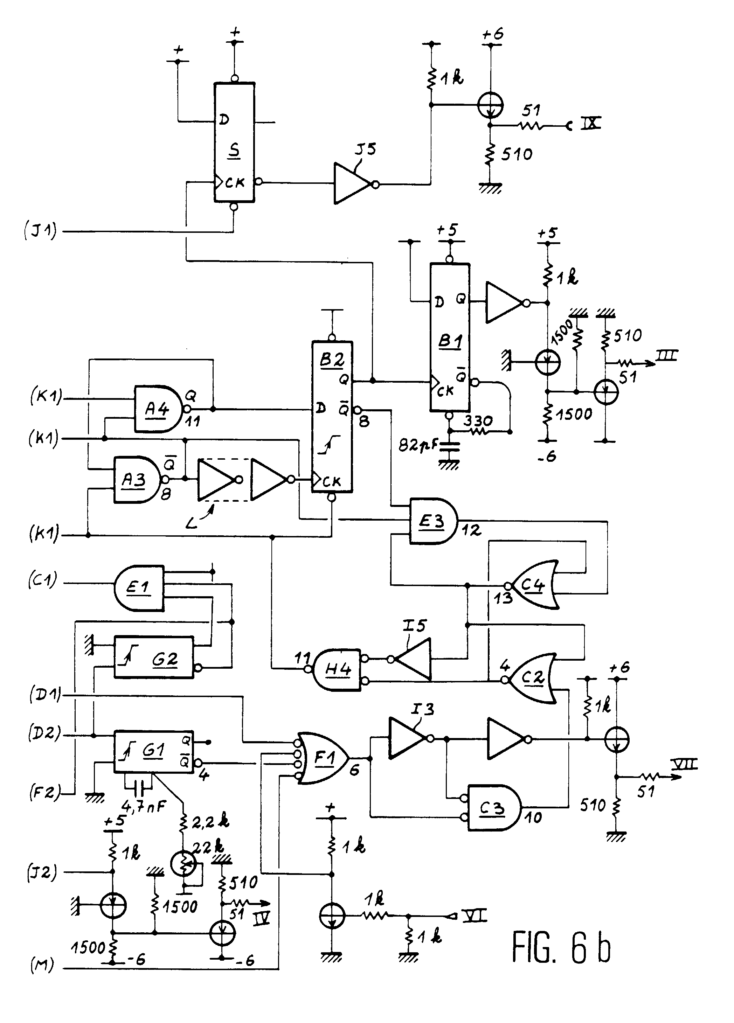

Un tel exemple est illustré par les figures 6a et 6b où une première partie du circuit de temps mort conforme à l'invention apparaît sur la figure 6a tandis que l'autre partie de ce circuit apparaît sur la figure 6b.

Cet exemple de circuit est réalisé à l'aide d'une série de circuits intégrés TTL rapides présentant un bon compromis vitesse/fonctions disponibles.

L'utilisation d'une autre logique (MOS par exemple) est bien entendu possible.

Le circuit tampon BUF de la figure 5 est constitué ici par les transistors Q1, Q2, Q3 et Q4 et le zéro en sortie de ce circuit tampon est réglé par le potentiomètre P1.

Un comparateur M délivrant en sortie des signaux en logique TTL, constitue le discriminateur d'amplitude DIS de la figure 5.

Le bistable MEM de cette figure 5 est constitué, dans le cas du circuit des figures 6a et 6b, par les portes logiques A3 et A4, l'ensemble L d'inverseurs montés en série et la bascule de type D portant la référence B2.

Le montage des éléments portant les références A3, A4, L et B2 permet de bénéficier de la vitesse des portes logiques utilisées, montées en bistable RS, tout en rejetant les basculements incomplets causés par des impulsions d'entrée trop courtes.

Sur la figure 6a on retrouve les portes logiques K1 et K2 de la figure 5.

Le monostable TM de la figure 5 porte la référence G1 sur la figure 6b et il est muni d'un potentiomètre permettant de régler le temps mort minimum imposé Tm.

Le circuit de mise en forme mf de la figure 5, qui est associé au monostable TM, est constitué dans le cas des figures 6a et 6b par les portes logiques F2, D1, D2, C1 et E1 et par le monostable G2.

Le bistable D de la figure 5 est ici constituée par les portes D3 et D4.

La porte logique F de la figure 5 porte la référence F1 sur la figure 6b.

On retrouve aussi sur la figure 6a le moyen de retardement RTD de la figure 5 constitué ici par deux inverseurs montés en série et munis d'un condensateur variable c1, comme on le voit sur la figure 6a, ce condensateur permettant d'ajuster le retard d1.

Le dispositif de remise à zéro RAZ de la figure 5 est constitué ici par l'inverseur I3, les portes logiques C2, C3 et C4, les portes logiques E3 et H4 et l'inverseur I5 de la figure 6b.

Le moyens de mise en forme MF de la figure 5 sont constitués ici par les portes logiques A2, E2 et H3 de la figure 6a.

Les composants 7812 et 7912 de la figure 6a sont des régulateurs de tension.

De plus, sur ces figures 6a et 6b, la référence I correspond à l'entrée du circuit tampon où arrivent des impulsions analogiques à traiter.

La référence II correspond à l'entrée des signaux d'horloge qui sont fournis par un générateur d'horloge non représenté avant d'être traités par les moyens de mise en forme constitués par les portes logiques A2, E2 et H3.

La référence III correspond à la sortie du circuit de temps mort, où sont disponibles les impulsions logiques à compter.

La référence IV correspond à la sortie du circuit de temps mort où sont disponibles les tops d'horloge à compter.

La référence V correspond à une entrée où arrivent des signaux de marche/arrêt (début de comptage/fin de comptage).

La référence VI correspond à une entrée de temps mort extérieur.

La référence VII correspond à une sortie où l'on peut contrôler le temps mort Tm.

La référence VIII correspond à une entrée de contrôle du seuil inférieur du discriminateur M.

La référence IX correspond à une sortie d'un signal d'autorisation d'analyse.

La référence X correspond à une entrée "mémoire non libre".

Les portes D1, D2, C1, E1, l'inverseur I4 et les monostables G1 et G2 fixent la longueur du temps mort minimum imposé Tm (temps mort interne).

Ce montage permet une sensibilité à des impulsions de quelques nanosecondes tout en conservant la fonction de temps mort reconductible.

En effet, les monostables G1 et G2 ne peuvent être déclenchés que par une impulsion ayant une durée minimale de l'ordre de 40 ns.

Le monostable G1 est précédé par un bistable RS constitué par les portes D1 et D2 et ce bistable est remis à zéro par le monostable G2 associé aux portes E1 et C1.

Lorsque ce bistable RS a été positionné par une impulsion à son entrée, ce bistable reste dans cet état jusqu'au déclenchement du monostable G2 et donc du monostable G1.

Une impulsion de remise à zéro est alors engendrée et appliquée à ce bistable RS.

Pendant cette opération, la porte F2 est fermée.

Ainsi le système est protégé.

Lorsque le temps mort est terminé (transition négative en sortie de la porte F1), une remise à zéro du bistable MEM (figure 5), constitué ici par les éléments référencés A3, A4, B2 et L, est engendrée à l'aide des circuits I3, C2, C3, C4, I5, H4 et E3.

Le bistable RS formé par les portes C2 et C4 est positionné par une impulsion de faible largeur issue de la mise en forme, par les circuits I3 et C3, du front arrière du temps mort.

Ce bistable RS reste positionné jusqu'à la remise à zéro complète du circuit de temps mort.

Cette remise à zéro est vérifiée à l'aide de la porte E3.

Lorsque la remise à zéro est terminée, toutes les entrées de la porte E3 passent au niveau haut et ce bistable RS est remis à zéro par l'impulsion disponible à la sortie de la porte E3.

Pendant tout ce temps, le circuit de temps mort est protégé car le porte K1 est fermée.

Tout ceci contribue à la grande sécurité de fonctionnement du circuit de temps mort.

L'inverseur I4 et le réseau r-c à l'entrée de ce dernier permet le positionnement correct du bistable précédant le monostable G1 à la mise sous tension du circuit de temps mort.

La bascule de type D portant la référence S sur la figure 6b et l'inverseur J5 élaborent un signal d'autorisation d'analyse nécessaire, dans l'exemple considéré, au codeur d'amplitude (non représenté) : ne pourra être analysée que la première impulsion à l'entrée, ayant déclenché le temps mort.

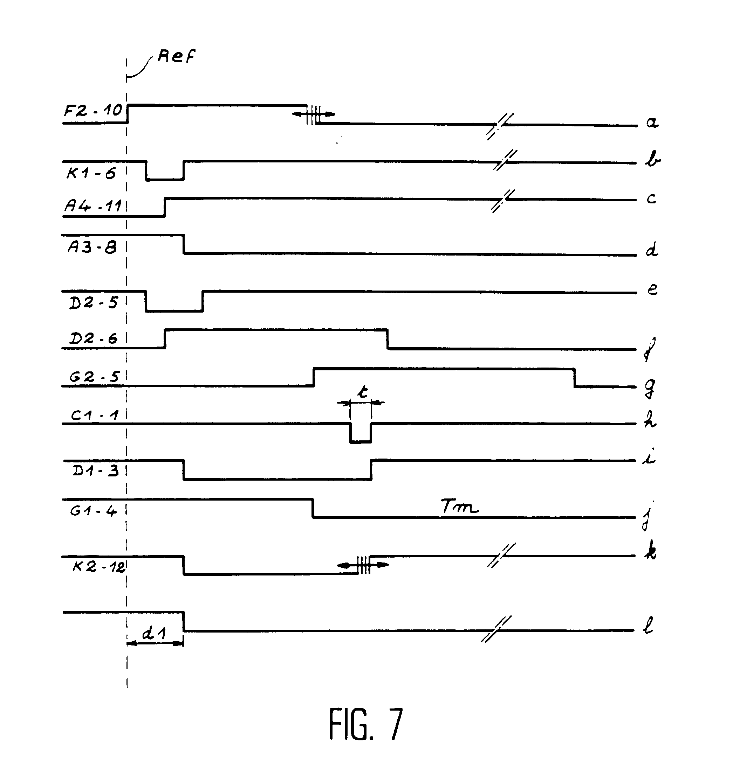

La figure 7 est un chronogramme relatif au circuit de temps mort représenté sur les figures 6a et 6b, ce chronogramme correspondant au début du temps mort.

Pour chaque ligne de la figure 7, la référence placée au début de cette ligne correspond à l'endroit où le signal représenté sur cette ligne est observé.

La ligne a de la figure 7 montre le signal de sortie du discriminateur M, mesurée à l'entrée 10 de la porte F2.

Le trait vertical en pointillé qui est référencé Ref correspond au début de l'impulsion fournie en sortie de ce discriminateur M.

Le temps de propagation des signaux, dans les portes logiques du circuit des figures 6a et 6b est noté t et vaut environ 3 ns dans l'exemple représenté.

Sur la figure 7, la ligne b montre le signal présent à l'entrée du bistable constitué par les composants A3, A4, B2 et L (référencé MEM sur la figure 5).

La ligne c montre le signal à la sortie non-inverseuse de ce bistable.

La ligne d montre le signal à la sortie inverseuse de ce bistable.

La ligne e montre le signal disponible à l'entrée du bistable RS constitué par les portes D1 et D2.

La ligne f montre le signal présent à la sortie non-inverseuse de ce bistable RS.

La ligne g montre le signal disponible à la borne 5 du monostable G2 (remise en forme du signal logique d'entrée du monostable G1 de manière à déclencher convenablement le temps mort).

La ligne h montre le signal de remise à zéro du bistable RS mentionné ci-dessus.

La ligne i montre le signal disponible à la sortie inverseuse de ce bistable RS.

La ligne j montre le signal disponible à la sortie du monostable G1.

La ligne k montre le signal disponible à la sortie inverseuse du discriminateur M, mais retardé d'un temps d1 comme on l'a indiqué plus haut.

Enfin, la ligne l montre le signal de blocage de la porte de temps actif (K2).

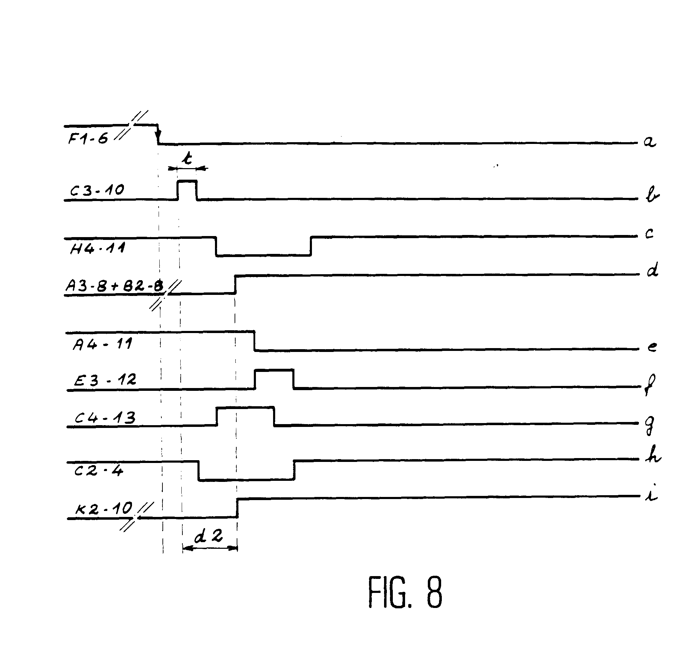

Le chronogramme de la figure 8, qui est encore relatif au circuit des figures 6a et 6b, correspond à la fin du temps mort.

Sur la figure 8, la ligne a montre la transition qui est alors obtenue à la sortie de la porte F1 (figure 6b).

La ligne b montre le signal obtenu à la sortie de la porte C3.

La ligne c montre le signal de sortie de la porte H4 (sortie du circuit de remise à zéro).

La ligne d montre le signal obtenu à la sortie inverseuse du bistable constitué par les composants A3, A4, B2 et L (bistable MEM de la figure 5).

La ligne e montre le signal présent à la sortie non-inverseuse de ce bistable.

La ligne f montre le signal de sortie de la porte logique E3 (remise à zéro du bistable RS formé par C2 et C4).

La ligne g montre le signal disponible à la sortie non-inverseuse du bistable RS formé par C2 et C4.

La ligne h montre le signal disponible à la sortie inverseuse de ce même bistable.

Enfin, la ligne i montre la fin du blocage de la porte de temps actif (instant d'ouverture de la porte K2).

En revenant à la figure 7, on peut noter que la porte K2 (porte de "temps actif") est fermée avec le retard d1 par rapport à l'arrivée de l'impulsion logique à l'entrée du circuit de temps mort.

Ce retard compense exactement le temps d2, que l'on voit sur la figure 8, qui existe à la fin du temps mort, au moment de la remise à zéro du bistable constitué par les composants A3, A4, B2 et L (référencé MEM sur la figure 5).

On reconstitue donc bien l'image exacte de la paralysie du circuit de temps mort même en présence d'une nouvelle impulsion à la fin du temps mort.

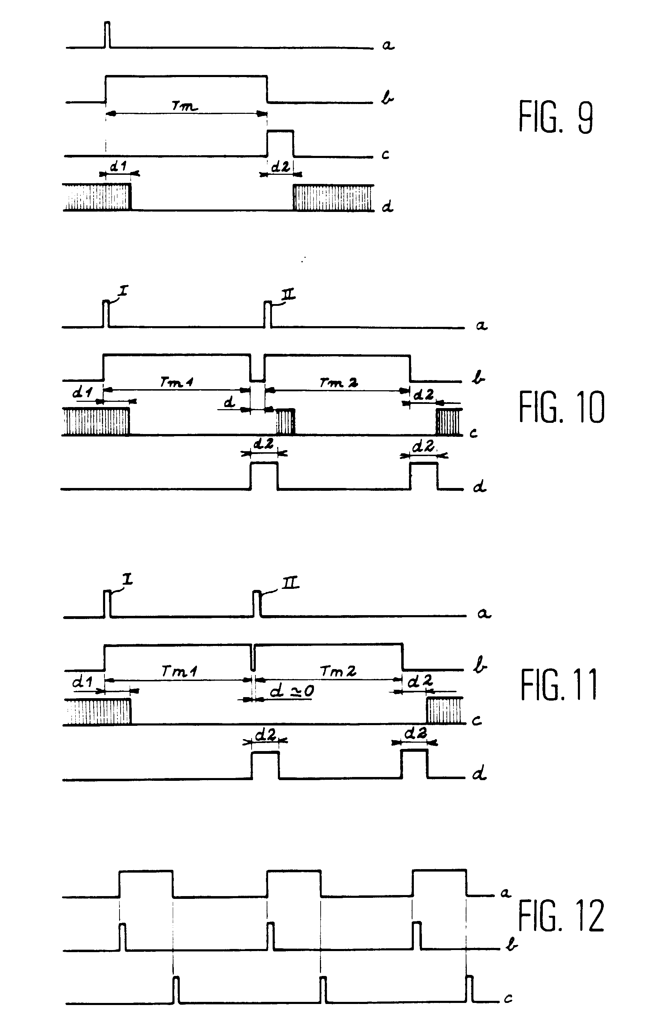

L'intérêt de l'invention est encore illustré par le chronogramme de la figure 9.

Sur la ligne a de cette figure 9, on voit une impulsion qui arrive à l'entrée du circuit de temps mort et qui est mise en forme.

Sur la ligne b on voit le temps mort imposé Tm.

Sur la ligne c on voit une impulsion représentant le temps nécessaire pour remettre à zéro le système.

Sur la ligne d on a représenté la mesure du temps actif.

A partir de la fin du temps mort, le circuit est capable de prendre en compte une nouvelle impulsion se présentant à l'entrée du circuit de temps mort mais on ne peut pas compter les tops d'horloge pendant le temps d2 alors qu'ils devraient l'être.

Pour compenser cela, on retarde, conformément à l'invention, le signal de fermeture de la porte de temps actif K2 d'un temps d1 égal à d2.

Le chronogramme de la figure 10 illustre également l'intérêt de la présente invention.

La ligne a de la figure 10 montre une première impulsion logique I mise en forme, présente à l'entrée du circuit de temps mort et une deuxième impulsion logique II qui se présente ultérieurement à l'entrée du circuit de temps mort.

La ligne b montre le temps mort Tm1 imposé par l'impulsion I et le temps mort Tm2 imposé par l'impulsion II.

La ligne c illustre la mesure du temps actif correspondant aux impulsions I et II.

La ligne d montre le retard à l'ouverture de la porte K2 permettant le comptage du temps actif.

Dans les situations illustrées par les figures 9, 10 et 11, le retard d1 appliqué à l'impulsion d'entrée I permet la mesure correcte du temps actif bien que la deuxième impulsion II soit très proche de la fin du temps mort imposé par la première.

Le chronogramme de la figure 12 aide à la compréhension de la mesure du temps actif dans le circuit représenté sur les figures 6a et 6b.

Comme on l'a déjà indiqué, on envoie à l'entrée du circuit de temps mort des tops d'horloge qui sont fabriqués à partir de tops d'horloge qui sont issus d'un générateur d'horloge et dont la durée est très inférieure à la durée de ces derniers.

On voit sur la ligne a de la figure 12 les tops d'horloge issus du générateur d'horloge.

A l'aide des portes A2, H3 et E2 (figures 6a) le front avant de chaque top d'horloge fourni par le générateur est extrait (ligne b de la figure 12) et le front arrière de ce top d'horloge est également extrait (ligne c de la figure 12), ces portes A2, H3 et E2 constituant les moyens de mise en forme MF de la figure 5.

L'impulsion de très courte durée, de l'ordre de quelques nanosecondes (ligne b de la figure 12) qui est fournie par la porte E2, va positionner le bistable constitué par les portes D3 et D4 après être passée par la porte échantillonneuse K2.

L'impulsion de très courte durée (ligne c de la figure 12) qui est disponible à la sortie de la porte H3, remet à zéro ce bistable.

A la sortie non-inverseuse de ce dernier, on obtient les tops d'horloge à compter, dont la largeur est égale aux tops d'horloges issus du générateur d'horloge.

On notera qu'il est nécessaire de tenir compte de la largeur effective du top d'horloge lorsque le taux de comptage à l'entrée du circuit de temps mort est très élevé.

Alors, en notant dt la largeur des tops d'horloge fournis par les moyens de mise en forme MF, on obtient :

$$N = N'/P1$$

où $P1 = (H'/H) - (N'xdt)$.

Le circuit de temps mort conforme à l'invention que l'on vient de décrire permet d'effectuer des corrections de pertes de comptage très précises en tenant compte du temps de passage des signaux dans les portes logiques utilisées et de la durée de l'impulsion logique d'entrée.

Ce circuit est insensible aux différentes combinaisons de durées ou de positions en temps des impulsions logiques à son entrée.

Ce circuit de temps mort n'est pas tributaire de la rapidité des circuits logiques employés et peut être facilement incorporé dans une chaîne de mesure où il remplacera très avantageusement un circuit de temps mort connu, de type reconductible ou de type non-reconductible.

De plus, ce circuit de temps mort conforme à l'invention est réalisable avec des circuits électroniques très courants sans pour cela compromettre la rapidité ou la sécurité du fonctionnement.

On a, jusqu'à présent, décrit un exemple particulier de circuit selon l'invention, mais cette dernière en englobe toutes les variantes.

Par exemple, il est possible, sans sortir du cadre de l'invention, de supprimer le moyen de retardement RTD ; on obtient un circuit légèrement moins performant mais qui peut être suffisant dans certaines applications, notamment si l'on met en oeuvre des circuits particulièrement rapides, dont les temps de passage dans les portes sont très faibles vis-à-vis du temps mort imposé.

## Revendications

1. Circuit de temps mort, de type reconductible, qui reçoit en entrée des impulsions logiques et des tops d'horloge, ce circuit comprenant un monostable (TM) qui est déclenché par les impulsions d'entrée, qui définit un temps mort minimal imposé et qui est redéclenchable pour reconduire la durée de ce temps mort minimal, le circuit fournissant en sortie

    - d'une part des impulsions à compter et
    - d'autre part ceux des tops d'horloge qui sont situés en dehors du temps mort et dont le comptage définit un temps actif permettant de déterminer le nombre effectif d'impulsions d'entrée, connaissant le nombre d'impulsions comptées, pendant un temps donné, ce circuit de temps mort étant caractérisé en ce qu'il comprend en outre
    - un bistable (MEM) qui est déclenché par une impulsion d'entrée et qui fournit en sortie l'impulsion à compter correspondante,

    - une première porte logique (F) par l'intermédiaire de laquelle la remise à zéro du bistable (MEM) est effectuée, après disparition de toutes les causes de temps mort, la première porte logique (F) recevant pour ce faire en entrée le signal de temps mort imposé et l'impulsion d'entrée, la remise à zéro du bistable (MEM) autorisant le redémarrage du comptage de temps actif, le monostable (TM) étant disponible, pendant cette remise à zéro, pour redéclencher un temps mort imposé s'il reçoit une nouvelle impulsion d'entrée,
    - une deuxième porte logique (K1) par l'intermédiaire de laquelle l'impulsion d'entrée déclenche le bistable (MEM) et qui est fermée après le déclenchement de ce bistable, et en ce que le circuit comprend en outre un moyen de remise à zéro (RAZ) prévu pour engendrer une impulsion de remise à zéro à partir de l'impulsion fournie par la sortie de la première porte logique (F) et pour appliquer cette impulsion de remise à zéro au bistable (MEM), la deuxième porte logique (K1) étant maintenue fermée pendant la durée de cette impulsion de remise à zéro.

2. Circuit selon la revendication 1, caractérisé en ce qu'il comprend aussi un moyen de retardement (RTD) prévu pour retarder d'un temps d1 le signal de blocage de mesure de temps actif à partir de l'arrivée d'une impulsion d'entrée, ce temps d1 étant égal au retard d2 du signal de déblocage de mesure du temps actif par rapport au moment où la prise en compte d'une nouvelle impulsion d'entrée est autorisée, et une troisième porte logique (K2) qui est fermée après le déclenchement du bistable (MEM), et par laquelle passent les tops d'horloge à compter.

3. Circuit selon la revendication 2, caractérisé en ce que le moyen de retardement comprend deux inverseurs (RTD) montés en série, l'un de ceux-ci recevant les impulsions logiques d'entrée tandis que la sortie de l'autre inverseur est reliée à une entrée de la troisième porte logique (K2).

4. Circuit selon l'une quelconque des revendications 1 à 3, caractérisé en ce que la première porte logique (F) comprend en outre une entrée destinée à recevoir un signal de temps mort extérieur.

5. Circuit selon l'une quelconque des revendications 1 à 4, caractérisé en ce qu'il comprend en outre un discriminateur (DIS) qui fournit les impulsions logiques d'entrée à partir d'impulsions analogiques incidentes.

6. Circuit selon l'une quelconque des revendications 1 à 5, caractérisé en ce qu'il comprend en outre un moyen (MF) prévu pour produire les tops d'horloge d'entrée à partir d'autres tops d'horloge dont la largeur est très supérieure à celle des tops d'horloge d'entrée.

7. Circuit selon la revendication 6, caractérisé en ce que le moyen prévu pour produire les tops d'horloge d'entrée est un moyen (MF) apte à extraire les fronts avant et arrière de ces autres tops d'horloge.

**Patentansprüche**

1. Rückstellbarer Totzeitschalter, der als Eingang logische Impulse und Taktimpulse empfängt, wobei dieser Schalter eine monostabile Schaltung (TM) enthält, die durch die Eingangs impulse ausgelöst wird, die eine vorgeschriebene Minimaltotzeit definiert und die rückstellbar ist, um die Dauer dieser Minimaltotzeit zu erneuern, und dieser Schalter dabei als Ausgang

- einerseits zu zählende Impulse liefert und
- andererseits diejenigen der Taktimpulse, die sich außerhalb der Totzeit befinden und deren Zählung eine Aktivzeit definiert, die ermöglicht, die tatsächliche Anzahl der Eingangsimpulse zu bestimmen,

wobei dieser Totzeitschalter, der die Anzahl der während einer bestimmten Zeit gezählten Impulse kennt, **dadurch gekennzeichnet** ist, daß er außerdem umfaßt:

- eine bistabile Schaltung (MEM), die durch einen Eingangsimpuls ausgelöst wird und die als Ausgang den entsprechenden zu zählenden Impuls liefert,
- ein erstes Logik-Glied (F), durch das nach Verschwinden aller Totzeit-Ursachen die Nullung der bistabilen Schaltung (MEM) erfolgt, wobei das erste Logik-Glied (F), um dies auszuführen, als Eingang das vorgeschriebene Totzeitsignal und den Eingangsimpuls empfängt, die Nullung der bistabilen Schaltung (MEM) den Neubeginn der Aktivzeitzählung gestattet und die monostabile Schaltung (TM) während dieser Nullung verfügbar ist, um wieder eine vorgeschriebene Totzeit auszulösen, wenn sie einen neuen Eingangsimpuls empfängt,

ein zweites Logik-Glied (K1), durch das der Eingangsimpuls die bistabile Schaltung (MEM) auslöst und das nach der Auslösung dieser bistabilen Schaltung gesperrt bzw. geschlossen wird, und dadurch, daß der Schalter außerdem eine Nullungseinrichtung (RAZ) enthält, vorgesehen um aufgrund des von dem Ausgang des ersten Logik-Glieds (F) gelieferten Impulses einen Nullungsimpuls zu erzeugen und um diesen Nullungsimpuls an die bistabile Schaltung (MEM) zu legen, wobei das zweite Logik-Glied (K1) während der Dauer dieses Nullungsimpulses gesperrt bzw. geschlossen gehalten wird.

2. Schalter nach Anspruch 1, dadurch gekennzeichnet, daß er auch eine Verzögerungseinrichtung (RTD) umfaßt, vorgesehen um ab dem Eintreffen eines Eingangsimpulses das Aktivzeitmessung-Sperrungssignal um eine Zeit dl zu verzögern, wobei diese Zeit dl gleich der Verzögerung d2 des Aktivzeitmessung-Entsperrungssignals in bezug auf den Zeitpunkt ist, wo die Berücksichtigung eines neuen Eingangimpulses gestattet ist, und ein drittes Logik-Glied (K2), das nach der Auslösung der bistabilen Schaltung (MEM) gesperrt bzw. geschlossen wird und das die zu zählenden Taktimpulse durchlaufen.

3. Schalter nach Anspruch 2, dadurch gekennzeichnet, daß die Verzögerungseinrichtungen zwei in Reihe geschaltete Inverter (RTD) umfaßt, von denen einer die logischen Eingangs impulse empfängt, während der Ausgang des anderen Inverters mit einem Eingang des dritten Logik-Glieds (K2) verbunden ist.

4. Schalter nach einem der Ansprüche 1 bis 3, dadurch gekennzeichnet, daß das erste Logik-Glied (F) außerdem einen Eingang umfaßt, der dazu bestimmt ist, ein Außentotzeitsignal zu empfangen.

5. Schalter nach einem der Ansprüche 1 bis 4, dadurch gekennzeichnet, daß er außerdem einen Diskriminator (DIS) umfaßt, der die logischen Eingangsimpulse aufgrund eintreffender analoger Impulse liefert.

6. Schalter nach einem der Ansprüche 1 bis 5, dadurch gekennzeichnet, daß er außerdem eine Einrichtung (MF) umfaßt, die Eingangstaktimpulse aufgrund anderer Taktimpulse erzeugt, deren Breite sehr viel größer als die der Eingangstaktimpulse ist.

7. Schalter nach Anspruch 6, dadurch gekennzeichnet, daß die zur Erzeugung der Eingangstaktimpulse vorgesehene Einrichtung (MF) eine Einrichtung ist, die die vorderen und hinteren Flanken dieser anderen Taktimpulse ausziehen bzw. herausziehen kann.

**Claims**

1. Dead-time circuit, of revivable type, which receives logic pulses and clock cues as input, this circuit comprising a monostable (TM) which is triggered by the input pulses, which defines an imposed minimum dead time and which is retriggerable so as to revive the duration of this minimum dead time, the circuit delivering as output

- on the one hand, pulses to be counted and
- on the other hand, those of the clock cues which lie outside the dead time and the counting of which defines an active time making it possible to determine the effective number of input pulses, knowing the number of pulses counted, over a given time, this dead-time circuit being characterized in that it furthermore comprises
- a bistable (MEM) which is triggered by an input pulse and which delivers as output the corresponding pulse to be counted,
- a first logic gate (F) by way of which a rezeroing of the bistable (MEM) is performed, after disappearance of all the causes of dead time, the first logic gate (F) receiving for this purpose as input the imposed dead time signal and the input pulse,

the rezeroing of the bistable (MEM) authorizing the restarting of the counting of active time, the monostable (TM) being available, during this rezeroing, to retrigger an imposed dead time if it receives a new input pulse,

- a second logic gate (K1) by way of which the input pulse triggers the bistable (MEM) and which is closed after the triggering of this bistable,

and in that the circuit furthermore comprises a rezeroing means (RAZ) provided so as to create a rezeroing pulse from the pulse delivered by the output of the first logic gate (F) and to apply this rezeroing pulse to the bistable (MEM), the second logic gate (K1) being kept closed for the duration of this rezeroing pulse.

2. Circuit according to Claim 1, characterized in that it also comprises a delaying means (RTD) provided so as to delay by a time dl the active time measurement disabling signal from the arrival of an input pulse, this time dl being equal to the delay d2 of the signal for enabling measurement of the active time with respect to the moment at which the taking into account of a new input pulse is authorized, and a third logic gate (K2) which is closed after the triggering of the bistable (MEM), and through which the clock cues to be counted pass.

3. Circuit according to Claim 2, characterized in that the delaying means comprises two invertors (RTD) mounted in series, one of them receiving the input logic pulses whilst the output of the other invertor is linked to an input of the third logic gate (K2).

4. Circuit according to any one of Claims 1 to 3, characterized in that the first logic gate (F) furthermore comprises an input intended to receive an external dead-time signal.

5. Circuit according to any one of Claims 1 to 4, characterized in that it furthermore comprises a discriminator (DIS) which delivers the input logic pulses from incoming analogue pulses.

6. Circuit according to any one of Claims 1 to 5, characterized in that it furthermore comprises a means (MF) provided so as to produce the input clock cues from other clock cues whose width is much greater than that of the input clock cues.

7. Circuit according to Claim 6, characterized in that the means provided so as to produce the input clock cues is a means (MF) able to extract the front and rear edges of these other clock cues.

FIG. 1

FIG. 2

EP 0 574 287 B1

EP 0 574 287 B1

FIG. 3

FIG. 4

FIG. 5

FIG. 6 a

FIG. 6 b

FIG. 7

FIG. 8

FIG. 9

FIG. 10

FIG. 11

FIG. 12